(19) Europäisches Patentamt
European Patent Office
Office européen des brevets

(11) **EP 3 518 584 B1**

(12) **EUROPEAN PATENT SPECIFICATION**

(45) Date of publication and mention
of the grant of the patent:
**27.10.2021 Bulletin 2021/43**

(51) Int Cl.:
**H04W 48/18** *(2009.01)*     **H04W 88/06** *(2009.01)*

(21) Application number: **18153694.7**

(22) Date of filing: **26.01.2018**

(54) **BEARER BASED TRAFFIC STEERING FOR M2M IOT**

TRÄGERBASIERTE VERKEHRSSTEUERUNG FÜR M2M IOT

PILOTAGE DU TRAFIC PAR PORTEUSE POUR M2M IDO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2019 Bulletin 2019/31**

(73) Proprietor: **Deutsche Telekom AG**
**53113 Bonn (DE)**

(72) Inventor: **SID ALI, Badie**
**53171 Bonn (DE)**

(74) Representative: **Vossius & Partner**
**Patentanwälte Rechtsanwälte mbB**
**Siebertstrasse 3**
**81675 München (DE)**

(56) References cited:
**US-A1- 2016 073 417     US-A1- 2016 150 349**
**US-A1- 2017 006 528     US-A1- 2017 339 629**
**US-A1- 2017 374 667**

• **MEDIATEK INC: "NB-IOT - Cell Selection and Reselection", 3GPP DRAFT; R2-156372 DISC NB-IOT - CELL SELECTION AND RESELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Anaheim, USA; 20151116 - 20151120 16 November 2015 (2015-11-16), XP051005817, Retrieved from the Internet: URL:http://www.3gpp.org/ftp/Meetings_3GPP_SYNC/RAN2/Docs/ [retrieved on 2015-11-16]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention refers to a method for controlling a connection between a device, particularly an IoT device, and a radio bearer. The invention also refers to a method for controlling a connection between a device, particularly an IoT device, and a radio bearer. As well, the invention refers to a device, particularly an IoT device, for controlling a connection to a radio bearer. Furthermore, the invention refers to a system for steering a connection between a device, particularly an IoT device, and a radio bearer.

WO 2017139047 A1 refers to narrow-band internet of things devices (NB-IoT devices).

US 20170245316 A1 refers to various methods to process a received data package. Accordingly, a device that receives a data packet to be transmitted via a mobile communication network, identifies an application category associated with the data packet, and requests a network connection corresponding to the identified application category.

US20170339629 A1 refers to different methods to select a node providing a first radio access technology (RAT) and a second RAT. The selection is carried out based on historical information, based on information carried by the signaling, such as system information or dedicated signaling, based on information acquired over the user plane from a server, based on information provided by other wireless apparatus, based on a cell search, e.g., an NB-IoT cell search on allowed NB-IoT anchor cell carriers, or based on an explicit indication from the network node that the network node is coordinating the operation of the first and second RATs, where the RAT identification and selection circuit identifies the RATs from the received coordination information. Accordingly, the device selects a node based on the properties of the node, about which the device is aware of by utilizing information.

In order to support several application categories simultaneously, a user equipment (UE) is configured to connect to multiple network slices simultaneously. Each network slice is optimized for a certain application category. In order to optimize the communication performance in this application category and potentially to reduce also the UE's battery consumption, the UE could steer one type of traffic to a network slice dedicated to that application category and all other traffic to another network slice that is optimized to support general mobile broadband (MBB) traffic.

However, configuring a device to choose one of multiple network slices according to the kind of application provides a complex configuration. Also, the time-interval for carrying out a process for connecting the device to the radio bearer may be too long which consumes too much energy. Furthermore, actual methods to connect provide that devices seek for radio bearers which have the strongest signal. This may be a radio bearer with any kind of signal, such as a 2G, 3G, LTE or a narrow-band radio signal.

Accordingly, an object of the present invention is to provide cost-effective methods, devices and a system allowing elongating the battery lifetime of the device without compromising a good connectivity of the device.

The invention is defined by the independent claims. Dependent claims refer to preferred embodiments.

According to a first aspect is provided a method for controlling a connection between a device, particularly an Internet-of-Things- device, and a radio bearer, the method comprising at least the following steps, preferably in the following order: a) receiving radio signals being emitted by at least one radio bearer; b) determining whether a radio bearer of the at least one radio bearer emits radio signals according to a criterion A that a frequency range of the radio signals corresponds to a predetermined frequency range; wherein the predetermined frequency range is such that a data packet is transmitted between the radio bearer and the device within a predefined time interval T1; and c) connecting the device with the radio bearer if the radio signals of the radio bearer fulfill criterion A.

In other words, the device chooses the radio bearer to be connected according to the frequency range. In particular, the frequency range is such that a symbol duration is longer than a transfer time T of the data packet between the radio bearer and the device.

According to a another aspect is provided a method for controlling a connection between a device, particularly an Internet-of-Things- device, and a radio bearer, the method comprising at least the following steps, preferably in the following order: a) receiving radio signals being emitted by at least one device, b) determining whether a device of the at least one device emits radio signals fulfilling a criterion A, that a frequency range of the radio signal corresponds to a predetermined frequency range, wherein the predetermined frequency range is such that a data packet is transmitted between the radio bearer and the device within a predefined time interval T1, and that the device is identified, particularly by an International Mobile Subscriber Identity, and c) connecting the device with the bearer if the criterion A is fulfilled.

According to another aspect is provided a device, particularly an Internet-of-Things-device, for controlling a connection to a radio bearer, the device comprising: receiving means configured to receive radio signals being emitted by at least one radio bearer; determination means configured to determine whether a radio bearer of the at least one radio bearer emits radio signals fulfilling a criterion A that a frequency range of the radio signals corresponds to a predetermined frequency range; wherein the predetermined frequency range is such that a data packet is transmitted between the radio bearer and the device within a predefined time interval T1; and connection means configured to connect the device with the radio bearer if the radio signal of the radio bearer fulfills criterion A.

According to another aspect is provided a system for controlling a connection between a device, particularly an Internet-of-Things-device, and a radio bearer, the system comprising: receiving means configured to receive radio signals being emitted by at least one device, determination means configured to determine whether a device of the at least one device emits radio signals according to a criterion A, that a frequency range of the radio signal corresponds to a predetermined frequency range, wherein the predetermined frequency range is such that a data packet is transmitted between the radio bearer and the device within a predefined time interval T1, and identifying means configured to identify the device, particularly by an International Mobile Subscriber Identity, and connection means configured to connect the device with the radio bearer if the criterion A is fulfilled.

The methods according to the invention are processed very quickly, particularly due to their small number of processing steps. They allow a device, particularly an NB-IoT device, and a radio bearer to be connected in a short couple of time. The devices and the system according to the invention are constructed with a simple configuration. Thus, they are produced and configured in a quick and cheap way. Also, the invention allows elongating the battery lifetime of the device without compromising a good connectivity of the device. Especially, the invention is advantageous for low energy consumers which have access to energy storages with small capacities.

Radio signals emitted by a plurality of radio bearers are received, and in the case that no radio bearer emits radio signals fulfilling criterion A, the method comprises determining whether a radio bearer of the plurality of radio bearers emits radio signals fulfilling a criterion B that the radio signals have the highest signal strength among the radio signals emitted by the plurality of radio bearers, and connecting the device with the radio bearer if the radio bearer emits radio signals fulfilling the criterion B.

Preferably, the frequency range is such that a symbol duration is longer than a transfer time T of the data packet between the radio bearer and the device.

Preferably, in the case that the device is connected to the radio bearer according to the criterion B, carrying out the steps a) to c), preferably after a lapse of a predefined time interval T2, wherein particularly the predefined time interval T2 is longer than the predefined time interval T1. Thereby, consumption of energy is reduced.

Preferably, the method comprises carrying out step a) for a predefined time interval T3 before starting with the step b), wherein particularly the predefined time interval T3 is longer than the predefined time interval T1 and is shorter than the predefined time interval T2. In other words, the device seeks for a predefined period of time (which may be configured) for a radio signal which has the preferred frequency range.

In particular, the time intervals T2 and T3 are chosen such that an energy consumption $E(T3)$ for seeking for a connection is smaller than an energy consumption $E(T2)$ for being connected to a radio bearer according to the criterion B. That means that a relation $E(T3)/E(T2)$ may be smaller than 1.

Preferably, radio signals emitted by a plurality of radio bearers are received, and in the case that it is determined that more than one of the plurality of radio bearers emit radio signals fulfilling criterion A, the method further comprises determining whether a radio bearer of the plurality of radio bearers fulfilling criterion A emits radio signals fulfilling criterion B, and connecting the device with the radio bearer if the radio signals of the radio bearer fulfill criterions A and B.

Preferably, the method comprises identifying one of the at least one radio bearer according to its radio signals and/or properties of a radio channel. Identifying the radio bearer may be advantageous when checking whether the radio bearer is trustworthy.

In particular, the method comprises determining whether one of the at least one radio bearer is comprised in a selection list of radio bearers, connecting the device with the radio bearer that is comprised in the selection list of radio bearers, and if no radio bearer that is comprised in the selection list of radio bearers is found, determining the radio bearer fulfilling the criterions A and/or B and connecting the one radio bearer of the at least one radio bearers to the device if the radio signals of the one radio bearer of the at least one radio bearers fulfill the criterions A and/or B. This eases that data packages are transferred without errors.

Particularly, the selection list of radio bearers comprises a prioritization for $n \in \mathbb{N}$ items as follows:

- $n^{th}$-priority = radio bearer (2a, 2b, 2c) of a service provider n,

- $(n + 1)^{th}$- priority = radio bearer (2a, 2b, 2c) with predetermined frequency range,

- $(n + 2)^{th}$-priority = radio bearer (2a, 2b, 2c) with a predefined mobile country code or mobile network code, wherein
the order to select the radio bearer (2a, 2b, 2c) is defined by n.

Particularly, in the case that more than one of the plurality of radio bearers is comprised in the selection list, the method comprises determining whether a radio bearer of the plurality of radio bearers being comprised in the selection list fulfills criterion A and/or criterion B, and connecting the device with the radio bearer if the radio bearer is comprised in the selection list and the radio signals of the radio bearers fulfill the criterion A and/or the criterion B.

Particularly, in the case that the device is connected to the radio bearer fulfilling criterion A, the radio bearer fulfilling criterion B, or the radio bearer being comprised elsewhere than in the first place of the selection list, carrying out steps a) to c) after a lapse of a predefined time interval T4. This eases further that radio bearers being part of the selection list are chosen so that a radio bearer according to its capability, such as the capability to securely transmit data packages can be chosen.

Particularly, the device comprises an applet, particularly a subscriber identity module, SIM, applet, configured to communicate with the determination means and to provide measures to the determination means for selecting the radio signal according to the criterion A and/or the criterion B.

Preferably, the methods according to the invention comprise the previously described method steps. Particularly, the devices and the system according to the invention are configured to carry out the previously described method steps and/or comprise the previously described features.

BRIEF DESCRIPTION OF DRAWINGS

FIG. 1    is a schematic view of a first embodiment according to the invention,
FIG. 2    is a schematic view of a second embodiment according to the invention and
FIG. 3    is a schematic view of a third embodiment according to the invention.

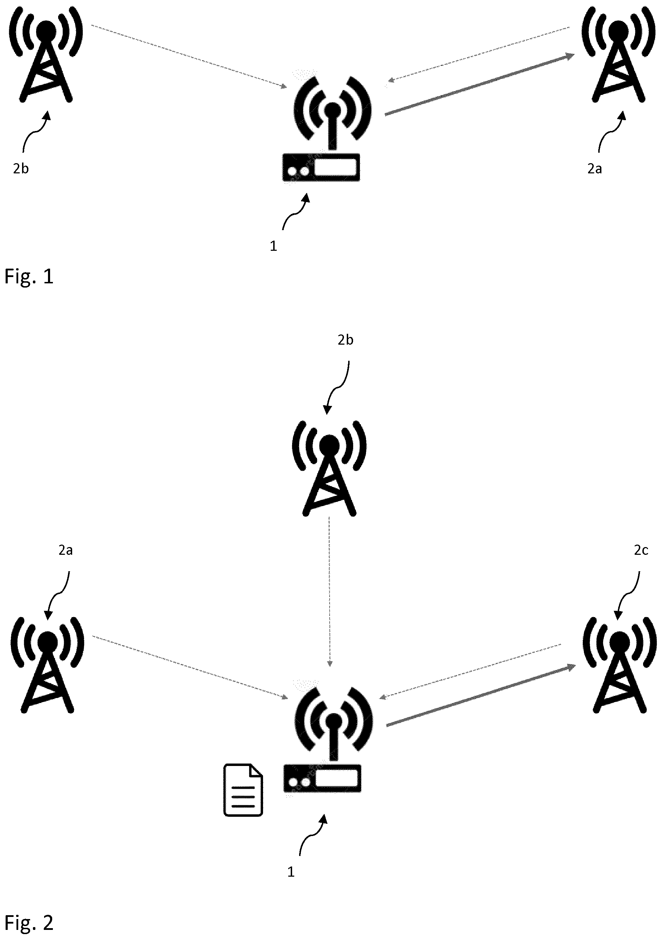

Fig. 1 depicts a first embodiment according to the invention. In Fig. 1, the arrangement of a device 1 is shown, whereby the device 1 is configured to connect to a first radio bearer 2a or to a second radio bearer 2b. Preferably, the device 1 is configured to use narrow-band IoT. Narrow-band IoT (NB-IoT) is a low power wide area network (LPWAN) radio technology standard developed to enable a wide range of devices and services to be connected using cellular telecommunications bands. NB-IoT is a narrow-band radio technology designed for the Internet of Things (IoT) and is one of a range of mobile IoT (MIoT) technologies standardized by the 3rd Generation Partnership Project (3GPP).

The Internet of Things (IoT) is a network of physical devices, such as vehicles, or home appliances. The physical devices are particularly embedded with electronics, software, sensors, actuators, and network connectivity which enables these objects to connect and exchange data. Preferably, each device is uniquely identifiable through its embedded computing system and it is able to inter-operate within the existing internet infrastructure.

The device 1 is preferably configured to use both NB-IoT and other wireless technologies, such as radio channels 2G, 3G or LTE. The device 1 comprises receiving means configured to receive radio signals being emitted by radio bearers 2a, 2b and determination means configured to select from the received radio signals radio signals of a first radio bearer 2a according to a criterion A that a frequency range of the radio signals corresponds to a predetermined frequency range.

The predetermined frequency range may be configured in the settings of the device 1, for example. The predetermined frequency range is such that a data packet is transmitted between the first radio bearer 2a and the device 1 within a predefined time interval T1. The device 1 further comprises connection means configured to connect the device 1 with the first radio bearer 2a if the criterion A is fulfilled.

Preferably, the frequency range of the radio bearer 2a, 2b is recognized by identifying a radio channel which the radio bearer 2a, 2b uses. That is, each radio bearer 2a, 2b emits radio signals which correspond to a certain radio channel. The emitted radio signals are characteristic for the radio channel. For this, controlling a connection between the device 1 and the radio bearer 2a, 2b is based on the radio channel of the radio bearers 2a, 2b. In Fig. 1, only two radio bearers 2a, 2b are shown. However, the device 1 and the method according to the invention may be used with a plurality of radio bearers.

The device 1 as previously described may establish the connection between the radio bearer 2a, 2b and the device 1 as follows: The first radio bearer 2a emits the radio signals which has the frequency range corresponding to the frequency range being predetermined by the device 1 according to the criterion A. Radio bearer 2b emits radio signals with another frequency range. The device 1 receives radio signals being emitted by radio bearers 2a, 2b. The device 1 determines with its determination means from the radio signals the radio signals of the first radio bearer 2a. The final step comprises connecting the device 1 by its connecting means with the first radio bearer 2a if the criterion A is fulfilled.

In other words, the device 1 is configured to connect itself to a radio bearer 2a, 2b which is predetermined by a configuration. The configuration is such that the device 1 seeks for a certain frequency range which is needed for transferring data packages. The device 1 itself may comprise configuration means which define that the device 1 is always connected to the radio bearer 2a, 2b with the predetermined frequency range. The configuration means may be permanently integrated or may be replaceable such as a subscriber identity module, SIM, card.

The radio signals are received by the device 1 with different received signal strength indicators (RSSI). RSSI is a measurement of the power present in received radio signals. The device 1 receives different radio channels of the radio bearers 2a, 2b. The device 1 is preferably configured to recognize and differentiate between different radio bearer signals based on properties of their radio channels. Analogously, the method comprises identifying radio bearers 2a, 2b, 2c according to their radio signals and/or a frequency range of the radio channel.

Preferably, in the case that the criterion A is not fulfilled, the step b) of the method comprises selecting radio signals of a second radio bearer 2b according to a criterion B that the radio signals have the highest signal strength, and connecting the device 1 with the second radio bearer 2b if the criterion B is fulfilled. Particularly, the device 1 is configured to carry out the previously described method step.

Preferably, in the case that the device 1 is connected to the second radio bearer 2b according to the criterion B, the method comprises carrying out the steps a) to c), particularly after a lapse of a second predefined time interval T2. Particularly, the device 1 is configured to carry out the previously described method step.

That is, the device 1 may be configured to permanently seek for another radio bearer fulfilling the criterion A if being connected to the second radio bearer 2b according to the criterion B. Alternatively, the device 1 may be configured to seek for another radio bearer fulfilling the criterion A if being connected to the second radio bearer 2b according to the criterion B after a predetermined period of time. For example, suppose that the device 1 is configured to prefer a narrow-band radio signals. Actually, the device 1 is connected to the second radio bearer providing the broadband signals. Then, the device 1 will seek for a radio bearer providing a channel with the narrow-band signals.

The device 1 may comprise switching means for switching ON or OFF its seeking functioning for seeking the radio signals of a radio bearer which fulfills the criterion A.

Preferably, the method comprises carrying out step a) for a predefined time interval T3 before starting with the step b). Particularly, the device 1 is configured to carry out the previously described method step. In other words, the device 1 seeks for a predefined period of time (which may be configured) for the radio signals which have the preferred frequency range.

In particular, the time intervals T2 and T3 are chosen such that an energy consumption E(T3) for seeking for a connection is smaller than an energy consumption E(T2) for being connected to the radio bearer 2b according to the criterion B. That is, a relation E(T3)/E(T2) is smaller than 1.

For example, the device 1 may set the time interval T3 according to a time to search of 20 seconds. The device 1 seeks for 20 seconds for radio signals corresponding to the radio signals of the first radio bearer 2a which fulfills the criterion A. If radio signals fulfilling the criterion A are found, the device 1 will connect to the first radio bearer 2a which emits the radio signals. If the time interval T3 has lapsed, the device 1 will connect to another radio bearer which is the second radio bearer 2b fulfilling the criterion B. That is, the device 1 preferably does not carry out a further search before connecting to the second radio bearer 2b according to the criterion B.

Particularly, the device 1 is configured to set up a priority for what type of radio bearer 2a, 2b it will be connected first.

Preferably, in the case that a plurality of radio signals fulfill the criterion A, the step b) comprises selecting from the plurality of radio signals fulfilling the criterion A, radio signals of a third radio bearer 2c fulfilling the criterion B, and connecting the device 1 with the third radio bearer 2c. Fig. 2 depicts an arrangement in which the device 1 is configured for carrying out the previously described method. Particularly, compared to the embodiment according to Fig. 1, a preferred radio bearer 2a, 2b, 2c may be chosen according to a selection list of preferred radio bearers. Particularly, the device 1 and the method according to the second embodiment also comprise the features described in the context of the first embodiment. Fig. 2 shows an arrangement with one device 1 and three radio bearers 2a, 2b , 2c whereby the method may be carried out with a plurality of radio bearers and/or a plurality of devices.

Preferably, the method comprises selecting from the radio signals radio signals of a fourth radio bearer (which is not depicted in Fig. 2) according to a criterion that the fourth radio bearer is comprised in the selection list of radio bearers 2a, 2b, 2c and for connecting the device 1 with the fourth radio bearer if the criterion is fulfilled. Furthermore, the method comprises, if the aforementioned criterion is not fulfilled, carrying out the steps b) and c). Particularly, the device 1 is configured to carry out the previously described method steps.

More preferably, the selection list of radio bearers 2a, 2b, 2c comprises a prioritization for $n \in \mathbb{N}$ items of the selection list as follows:

- $n^{th}$-priority = radio bearer 2a, 2b, 2c of service provider n,

- $(n + 1)^{th}$-priority = radio bearer 2a, 2b, 2c with predetermined frequency range,

- $(n + 2)^{th}$-priority = radio bearer 2a, 2b, 2c with a predefined mobile country code or mobile network code,

wherein the order to select the radio bearer is defined by n. Particularly, the device 1 is configured to carry out the previously described method step.

For example, the radio bearer of a preferred partner 1 according to a first priority may be a first mobile provider. This partner may have a predetermined frequency range with good-quality signal strength. The radio bearer according to a second priority may be the radio bearer 2a, 2c with the predetermined frequency range and the radio bearer according to a third priority may be chosen according to a mobile country code (MCC) or a mobile network code (MNC). The selection list may comprise more items with any kind of the previously mentioned radio bearers (according to the first, second or third criterion).

If any of the prioritized radio bearers contained in the selection list cannot be found by the device 1, the device 1 may be configured to restart seeking for the radio bearers contained in the selection list after a predetermined period of time or instantaneously after having checked detected radio signals for radio signals of a radio bearer according to the last item of the selection list.

Preferably, the device 1 comprises means, particularly a SIM applet, configured to communicate with the determination means and to provide measures to the determination means for selecting the radio signals according to the criterion A and/or the criterion B. Preferably, the SIM applet is configured to recognize a type of radio bearer 2a, 2b, 2c. In particular, the SIM applet comprises the selection list and is configured to select the radio bearer 2a, 2b, 2c based on this selection list.

As an example, in case of roaming, the device 1 receives multiple signals from radio bearers of multiple mobile network operators (MNO roaming partners). The SIM applet contains the selection list and directs the device 1 to connect to the radio bearers in the order indicated in the selection list. Preferably, the selection list does not only contain MNC and MCC but also the kind of radio bearer which is preferred. The SIM applet may be configured to recognize the type of radio bearer based on the radio channels. In particular, the method also comprises updating the selection list.

For example, a working principle with the SIM applet may be as follows: The SIM is uploaded with the selection list. The selection list prioritizes the NB-IoT radio bearers 2a, 2c compared to other radio bearers. Once the device 1 is switched on, it will be ready to receive radio signals of radio bearers in order to attach to it. For example, the first radio bearer 2a emits broadband radio signals. The second radio bearer 2b emits narrow-band radio signals. The second radio bearer 2b is contained in fourth place of the selection list as a partner 2. A third radio bearer 2c emits narrow-band radio signals, too and is contained in first place of the selection list as a service provider 1.

If only the NB-IoT radio signals of the second radio bearer 2b are found, the device 1 will automatically be connected to it. If NB-IoT signals of more than one radio bearer (for example the signals of the second radio bearer 2b and the third radio bearer 2c) are found, particuarly with an adequate signal strengh, the device 1 will read the selection list and attach to a first mobile network operator (MNO) in the list which is the third radio bearer 2c. If no NB-IoT signals are found, the device 1 will read, as well, the selection list and attach to the first MNO in the list with a radio bearer emitting broadband signals which may be the first radio bearer 2a in the present embodiment.

Preferably, in the case that a plurality of radio signals fulfill the criterion to be radio bearers which are comprised in the selection list, the step b) comprises selecting from the plurality of radio signals fulfilling the criterion radio signals of a fifth radio bearer (not depicted) fulfilling the criterion B, and connecting the device 1 with the fifth radio bearer. Referring to the previously described example, the fifth radio bearer is a radio bearer of the selection list with a high signal strength. Particularly, the device 1 is configured to carry out the previously described method step.

Preferably, in the case that the device 1 is connected to the first, second, or third radio bearer, the method comprises carrying out steps a) to c) after a lapse of a predefined time interval T4. This eases further, that radio bearers being part of the selection list are chosen so that a radio bearer according to its capability, such as the capability to securely transmit data packages is chosen. Particularly, the device 1 is configured to carry out the previously described method step.

The aforementioned methods and devices refer to a bottom-up approach where the device 1 seeks for radio signals of radio bearers 2a, 2b, 2c. However, a top-down approach is also possible in which, preferably radio bearers 2a, 2b, 2c of, the network seek(s) for devices 1 which should be connected to the network.

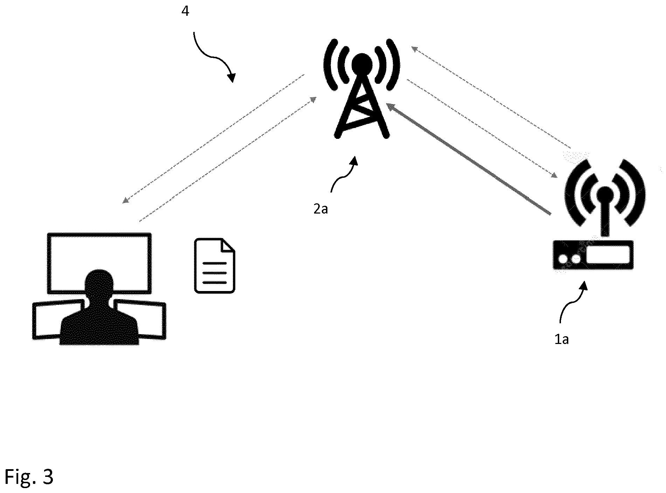

Accordingly, a system 4 for controlling a connection between the device 1, particularly an IoT device, and the radio bearer is provided. A possible arrangement according to this embodiment is depicted in Fig. 3. Fig. 3 shows an arrangement with one device 1a and one radio bearer 2a, whereby the system 4 may comprise a plurality of radio bearers and/or a plurality of devices and may be configured accordingly to carry out the previously described method steps.

The system 4 comprises seeking means configured to seek for radio signals being emitted by at least one device and identifying means configured to identify radio signals of a first device 1a according to a criterion A. According to the criterion A, a frequency range of the first radio signals corresponds to a predetermined frequency range, wherein the predetermined frequency range is such that a data packet is transmitted between the first radio bearer 2a and the device 1a within a predefined time interval T1, and that the device 1a is identified, particularly by an International Mobile Subscriber Identity. The system 4 further comprises connection means for connecting the device 1a with the first radio bearer 2a if the criterion A is fulfilled.

According to a possible embodiment, the first device 1a will always be connected to the radio bearer 2a of a network of the system 4, if the device 1a is in a catchment area of the network. However, in order to be connected to the network, it is provided that the device 1a can be identified and, particularly is authorized to be connected to the network.

According to an exemplary method, the MNO assigns a predefined International Mobile Subscriber Identity (IMSI) to an IoT/M2M device 1 that requires NB-IoT. Whenever the device 1a is connected to the network the network will recognize the IMSI as IoT/M2M range and will force the device 1a to be connected to the NB-IoT network whenever it is possible and use other radio bearers, particularly with broadband radio channels (according to the criterion B), as a fall back solution.

According to a possible embodiment, a dedicated IMSI range will be used for NB-IoT. The IMSI range will be shared with roaming partners. Once the device 1 is switched on, it tries to communicate with the network and attach to it, particular to a radio bearer of the network. If the network of the system 4 can identify the device 1 and can verify that the device 1 uses a predefined frequency range, for example in the way that it recognizes that the device 1 is using an IMSI range that is dedicated for NB-IoT, it will connect the device 1 automatically to a radio bearer emitting NB-IoT signals whenever it is available.

The system 4 may be configured to select radio bearers to be connected to the device 1a according to the criterion B, too. That is, the system 4 may be configured to carry out any of the method steps according to the first and/or according to the second embodiment.

Preferably, the time intervals T1, T2, T3 and T4 are flexibly configurable.

REFERENCE SIGNS LIST

1 device
1a first device
2a first radio bearer
2b second radio bearer
2c third radio bearer
4 system

**Claims**

1. A method for controlling a connection between a device (1), which is an Internet-of-Things- device, and a radio bearer (2a, 2b, 2c), the method comprising at least the following steps performed by the device in the following order:

    a) receiving radio signals being emitted by a plurality of radio bearers (2a, 2b, 2c), wherein each of the plurality of radio bearers (2a, 2b, 2c) emits radio signals which correspond to a certain radio channel;
    b) determining whether a radio bearer (2a, 2b, 2c) of the plurality of radio bearers (2a, 2b, 2c) emits radio signals according to a criterion A that a frequency range of the radio signals corresponds to a predetermined frequency range based on the received radio signals, wherein the predetermined frequency range is such that a data packet is transmitted between the radio bearer (2a, 2b, 2c) and the device (1) within a predefined time interval T1;
    c) connecting the device (1) with the radio bearer (2a, 2b, 2c) if the radio signals of the radio bearer (2a, 2b, 2c) fulfill criterion A;
    in the case that no radio bearer (2a, 2b, 2c) emits radio signals fulfilling criterion A, determining whether a radio bearer (2a, 2b, 2c) of the plurality of radio bearers (2a, 2b, 2c) emits radio signals fulfilling a criterion B that the radio signals have the highest signal strength among the radio signals emitted by the plurality of radio bearers (2a, 2b, 2c), and connecting the device (1) with the radio bearer (2a, 2b, 2c) if the radio bearer (2a, 2b, 2c) emits radio signals fulfilling the criterion B.

2. The method according to claim 1, wherein the frequency range is such that a symbol duration is longer than a transfer time T of the data packet between the radio bearer (2a, 2b, 2c) and the device (1).

3. The method according to any of claims 1 to 2, wherein in the case that the device (1) is connected to the radio bearer (2b) according to the criterion B, carrying out the steps a) to c), after a lapse of a predefined time interval T2, wherein the predefined time interval T2 is longer than the predefined time interval T1.

4. The method according to any of claims 1 to 3, comprising carrying out step a) for a predefined time interval T3 before starting with the step b), wherein the predefined time interval T3 is longer than the predefined time interval T1 and is shorter than the predefined time interval T2.

5. The method according to any of claims 1 to 4, wherein

    radio signals emitted by a plurality of radio bearers (2a, 2b, 2c) are received, and in the case that it is determined that more than one of the plurality of radio bearers (2a, 2b, 2c) emit radio signals fulfilling criterion A, the method further comprises determining whether a radio bearer (2a, 2b, 2c) of the plurality of radio bearers (2a, 2b, 2c) fulfilling criterion A emits radio signals fulfilling criterion B, and connecting the device (1) with the radio bearer (2a, 2b, 2c) if the radio signals of the radio bearer (2a, 2b, 2c) fulfill criterions A and B.

6. The method according to any of claims 1 to 5, comprising identifying one of the at least one radio bearer (2a, 2b, 2c) according to its radio signals and/or properties of a radio channel.

7. The method according to any of claims 1 to 6, comprising

> determining whether one of the at least one radio bearer (2a, 2b, 2c) is comprised in a selection list of radio bearers (2a, 2b, 2c),
> connecting the device (1) with the radio bearer (2a, 2b, 2c) that is comprised in the selection list of radio bearers (2a, 2b, 2c), and if no radio bearer (2a, 2b, 2c) that is comprised in the selection list of radio bearers (2a, 2b, 2c) is found, determining the radio bearer (2a, 2b, 2c) fulfilling the criterions A and/or B and connecting the one radio bearer (2a, 2b, 2c) of the at least one radio bearers (2a, 2b, 2c) to the device (1) if the radio signals of the one radio bearer (2a, 2b, 2c) of the at least one radio bearers fulfill the criterions A and/or B.

8. The method according to claim 7, wherein the selection list of radio bearers (2a, 2b, 2c) comprises a prioritization for $n \in \mathbb{N}$ items as follows:

> - $n^{th}$-priority = radio bearer (2a, 2b, 2c) of a service provider n,
> - $(n + 1)^{th}$- priority = radio bearer (2a, 2b, 2c) with predetermined frequency range,
> - $(n + 2)^{th}$-priority = radio bearer (2a, 2b, 2c) with a predefined mobile country code or mobile network code, wherein
> the order to select the radio bearer (2a, 2b, 2c) is defined by n.

9. The method according to claim 7 or 8, wherein

> in the case that more than one of the plurality of radio bearers (2a, 2b, 2c) is comprised in the selection list,
> the method comprises determining whether a radio bearer (2a, 2b, 2c) of the plurality of radio bearers (2a, 2b, 2c) being comprised in the selection list fulfills criterion A and/or criterion B, and connecting the device (1) with the radio bearer (2a, 2b, 2c) if the radio bearer (2a, 2b, 2c) is comprised in the selection list and the radio signals of the radio bearers (2a, 2b, 2c) fulfill the criterion A and/or the criterion B.

10. The method according to any of claims 7 to 9, wherein
in the case that the device (1) is connected to the radio bearer fulfilling criterion A, the radio bearer fulfilling criterion B, or the radio bearer being comprised elsewhere than in the first place of the selection list, carrying out steps a) to c) after a lapse of a predefined time interval T4.

11. A method for controlling a connection between a device (1), which is an Internet-of-Things- device, and a radio bearer (2a) by the radio bearer (2a), the method comprising at least the following steps performed by a system (4) in the following order:

> a) receiving radio signals being emitted by at least one device,
> b) determining whether a device (1a) of the at least one device emits radio signals fulfilling a criterion A,
>
> > - that a frequency range of the radio signal corresponds to a predetermined frequency range, wherein the predetermined frequency range is such that a data packet is transmitted between the radio bearer (2a) and the device (1a) within a predefined time interval T1, and
> > - that the device (1a) is identified by an International Mobile Subscriber Identity, and
>
> c) connecting the device (1a) with the bearer (2a) if the criterion A is fulfilled,
>
> > in the case that no device emits radio signals fulfilling criterion A,
> > determining whether a device (1a) of the at least one device emits radio signals fulfilling a criterion B that the radio signals have the highest signal strength among the radio signals emitted by the at least one device, and connecting the device (1) with the radio bearer (2a) if the criterion B is fulfilled.

12. A device (1), which is an Internet-of-Things- device, for controlling a connection to a radio bearer, wherein the radio bearer is configured to emit radio signals which correspond to a certain radio channel, the device (1) comprising:

> receiving means configured to receive radio signals being emitted by a plurality of radio bearers (2a, 2b, 2c);
> determination means configured to determine whether a radio bearer (2a, 2b, 2c) of the plurality of radio bearers (2a, 2b, 2c) emits radio signals fulfilling a criterion A that a frequency range of the radio signals corresponds to a predetermined frequency range based on the received radio signals,
> wherein the predetermined frequency range is such that a data packet is transmitted between the radio bearer (2a, 2b, 2c) and the device (1) within a predefined time interval T1; and
> connection means configured to connect the device (1) with the radio bearer (2a, 2b, 2c) if the radio signal of the radio bearer (2a, 2b, 2c) fulfills criterion A;

wherein the determination means are further configured to determine whether a radio bearer (2a, 2b, 2c) of the plurality of radio bearers (2a, 2b, 2c) emits radio signals fulfilling a criterion B that the radio signals have the highest signal strength among the radio signals emitted by the plurality of radio bearers (2a, 2b, 2c), and wherein the connection means are further configured to connect the device (1) with the radio bearer (2a, 2b, 2c) if the radio bearer (2a, 2b, 2c) emits radio signals fulfilling the criterion B in the case that no radio bearer (2a, 2b, 2c) emits radio signals fulfilling criterion A.

13. The device (1) according to claim 12, comprising a subscriber identity module, SIM, applet configured to communicate with the determination means and to provide measures to the determination means for selecting the radio signal according to the criterion A and/or the criterion B.

14. A system (4) for controlling a connection between a device (1), which is an Internet-of-Things-device, and a radio bearer, wherein the radio bearer is configured to emit radio signals which correspond to a certain radio channel, the system (4) comprising:

receiving means configured to receive radio signals being emitted by at least one device, determination means configured to determine whether a device (1a) of the at least one device emits radio signals according to a criterion A,

- that a frequency range of the radio signal corresponds to a predetermined frequency range, wherein the predetermined frequency range is such that a data packet is transmitted between the radio bearer (2a) and the device (1a) within a predefined time interval T1, and identifying means configured to identify the device (1a) by an International Mobile Subscriber Identity, and

connection means configured to connect the device (1a) with the radio bearer (2a) if the criterion A is fulfilled; wherein the determination means are further configured to determine whether the device (1a) emits radio signals fulfilling a criterion B that the radio signals have the highest signal strength among the radio signals emitted by the at least one device, and wherein the connection means are further configured to connect the device (1a) with the radio bearer (2a, 2b, 2c) if the device (1a) emits radio signals fulfilling the criterion B in the case that no device emits radio signals fulfilling criterion A.

**Patentansprüche**

1. Verfahren zum Steuern einer Verbindung zwischen einer Vorrichtung (1), die eine Internet-der-Dinge-Vorrichtung ist, und einem Funkträger (2a, 2b, 2c), wobei das Verfahren mindestens die folgenden Schritte aufweist, die durch die Vorrichtung in der folgenden Reihenfolge ausgeführt werden:

a) Empfangen von Funksignalen, die durch mehrere Funkträger (2a, 2b, 2c) emittiert werden, wobei jeder der mehreren Funkträger (2a, 2b, 2c) Funksignale emittiert, die einem bestimmten Funkkanal entsprechen;
b) Feststellen, ob ein Funkträger (2a, 2b, 2c) der mehreren Funkträger (2a, 2b, 2c) Funksignale gemäß einem Kriterium A emittiert, dass ein Frequenzbereich der Funksignale einem vorbestimmten Frequenzbereich entspricht, beruhend auf den empfangenen Funksignalen, wobei der vorbestimmte Frequenzbereich derart ist, dass ein Datenpaket zwischen dem Funkträger (2a, 2b, 2c) und der Vorrichtung (1) innerhalb eines vordefinierten Zeitintervalls T1 übertragen wird;
c) Verbinden der Vorrichtung (1) mit dem Funkträger (2a, 2b, 2c), wenn die Funksignale des Funkträgers (2a, 2b, 2c) das Kriterium A erfüllen; in dem Fall, dass kein Funkträger (2a, 2b, 2c) Funksignale emittiert, die das Kriterium A erfüllen, Feststellen, ob ein Funkträger (2a, 2b, 2c) der mehreren Funkträger (2a, 2b, 2c) Funksignale emittiert, die ein Kriterium B erfüllen, dass die Funksignale die höchste Signalstärke unter den durch die mehreren Funkträger (2a, 2b, 2c) emittierten Funksignalen aufweisen, und Verbinden der Vorrichtung (1) mit dem Funkträger (2a, 2b, 2c) wenn der Funkträger (2a, 2b, 2c) Funksignale emittiert, die das Kriterium B erfüllen.

2. Verfahren nach Anspruch 1, wobei der Frequenzbereich derart ist, dass eine Symboldauer länger als eine Übertragungszeit T des Datenpakets zwischen dem Funkträger (2a, 2b, 2c) und der Vorrichtung (1) ist.

3. Verfahren nach einem der Ansprüche 1 bis 2, wobei in dem Fall, dass die Vorrichtung (1) gemäß dem Kriterium B mit dem Funkträger (2b) verbunden ist, Ausführen der Schritte a) bis c), nach Ablauf eines vordefinierten Zeitintervalls T2, wobei das vordefinierte Zeitintervall T2 länger ist als das vordefinierte Zeitintervall T1.

4. Verfahren nach einem der Ansprüche 1 bis 3, das aufweist:
Ausführen des Schritts a) für ein vordefiniertes Zeitintervall T3, bevor mit dem Schritt b) begonnen wird, wobei das vordefinierte Zeitintervall T3 länger ist als das vordefinierte Zeitintervall T1 und kürzer als das vordefinierte Zeitintervall T2 ist.

5. Verfahren nach einem der Ansprüche 1 bis 4, wobei durch mehrere Funkträger (2a, 2b, 2c) emittierte Funksignale empfangen werden und in dem Fall, dass festgestellt wird, dass mehr als einer der mehreren Funkträger (2a, 2b, 2c) Funksignale emittiert, die das Kriterium A erfüllen, das Verfahren ferner das Feststellen aufweist, ob ein Funkträger (2a, 2b, 2c) der mehreren Funkträger (2a, 2b, 2c), die das Kriterium A erfüllen, Funksignale emittiert, die das Kriterium B erfüllen, und Verbinden der Vorrichtung (1) mit dem Funkträger (2a, 2b, 2c), wenn die Funksignale des Funkträgers (2a, 2b, 2c) die Kriterien A und B erfüllen.

6. Verfahren nach einem der Ansprüche 1 bis 5, das aufweist:
Identifizieren eines des mindestens einen Funkträgers (2a, 2b, 2c) gemäß seinen Funksignalen und/oder Eigenschaften eines Funkkanals.

7. Verfahren nach einem der Ansprüche 1 bis 6, das aufweist:

Feststellen, ob einer des mindestens einen Funkträgers (2a, 2b, 2c) in einer Auswahlliste von Funkträgern (2a, 2b, 2c) enthalten ist,
Verbinden der Vorrichtung (1) mit dem Funkträger (2a, 2b, 2c), der in der Auswahlliste der Funkträger (2a, 2b, 2c) enthalten ist, und wenn kein Funkträger (2a, 2b, 2c), der in der Auswahlliste der Funkträger (2a, 2b, 2c) enthalten ist, gefunden wird, Feststellen des Funkträgers (2a, 2b, 2c), der das Kriterium A und/oder B erfüllt, und Verbinden des einen Funkträgers (2a, 2b, 2c) des mindestens einen Funkträgers (2a, 2b, 2c) mit der Vorrichtung (1), wenn die Funksignale des einen Funkträgers (2a, 2b, 2c) des mindestens einen Funkträgers das Kriterium A und/oder B erfüllen.

8. Verfahren nach Anspruch 7, wobei

die Auswahlliste der Funkträger (2a, 2b, 2c) eine Priorisierung für $n \in \mathbb{N}$ Einträge wie folgt aufweist:

- nte-Priorität = Funkträger (2a, 2b, 2c) eines Diensteanbieters n,
- (n + 1)te- Priorität = Funkträger (2a, 2b, 2c) mit einem vorbestimmten Frequenzbereich,
- (n + 2)te-Priorität = Funkträger (2a, 2b, 2c) einer vordefinierten Mobilfunk-Länderkennung oder Mobilfunknetzkennzahl, wobei die Reihenfolge zum Auswählen des Funkträgers (2a, 2b, 2c) durch n definiert ist.

9. Verfahren nach Anspruch 7 oder 8, wobei

in dem Fall, dass mehr als einer der mehreren Funkträger (2a, 2b, 2c) in der Auswahlliste enthalten ist,
das Verfahren das Feststellen aufweist, ob ein Funkträger (2a, 2b, 2c) der mehreren Funkträger (2a, 2b, 2c), die in der Auswahlliste enthalten sind, das Kriterium A und/oder B erfüllen, und Verbinden der Vorrichtung (1) mit dem Funkträger (2a, 2b, 2c), wenn der Funkträger (2a, 2b, 2c) in der Auswahlliste enthalten ist und die Funksignale des Funkträgers (2a, 2b, 2c) das Kriterium A und/oder B erfüllen.

10. Verfahren nach einem der Ansprüche 7 bis 9, wobei in dem Fall, dass die Vorrichtung (1) mit dem Funkträger, der das Kriterium A erfüllt, dem Funkträger, der das Kriterium B erfüllt, oder dem Funkträger verbunden ist, der an anderer Stelle als an der ersten Stelle der Auswahlliste enthalten ist, Ausführen der Schritte a) bis c) nach Ablauf eines vordefinierten Zeitintervalls T4.

11. Verfahren zum Steuern einer Verbindung zwischen einer Vorrichtung (1), die eine Internet-der-Dinge-Vorrichtung ist, und einem Funkträger (2a) durch den Funkträger (2a), wobei das Verfahren mindestens die folgenden Schritte aufweist, die durch ein System (4) in der folgenden Reihenfolge ausgeführt wird:

a) Empfangen von Funksignalen, die durch mindestens eine Vorrichtung emittiert werden,
b) Feststellen, ob eine Vorrichtung (1a) der mindestens einen Vorrichtung Funksignale emittiert, die ein Kriterium A erfüllen,

- dass ein Frequenzbereich des Funksignals einem vorbestimmten Frequenzbereich entspricht, wobei der vorbestimmte Frequenzbereich derart ist, dass ein Datenpaket zwischen dem Funkträger (2a) und der Vorrichtung (1a) innerhalb eines vordefinierten Zeitintervalls T1 übertragen wird, und
- dass die Vorrichtung (1a) durch eine internationale Mobilfunk-Teilnehmerkennung identifiziert wird, und

c) Verbinden der Vorrichtung (1a) mit dem Funkträger (2a), wenn das Kriterium A erfüllt ist, in dem Fall, dass keine Vorrichtung Funksignale emittiert, die das Kriterium A erfüllen,

Feststellen, ob eine Vorrichtung (1a) der mindestens einen Vorrichtung Funksignale emittiert, die ein Kriterium B erfüllen, dass die Funksignale die höchste Signalstärke unter den durch die mindestens eine Vorrichtung emittierten Funksignalen aufweisen, und Verbinden der Vorrichtung (1) mit dem Funkträger (2a), wenn das Kriterium B erfüllt ist.

12. Vorrichtung (1), die eine Internet-der-Dinge-Vorrichtung ist, zur Steuerung einer Verbindung mit einem Funkträger, wobei der Funkträger konfiguriert ist, Funksignale zu emittieren, die einem bestimmten Funkkanal entsprechen, wobei die Vorrichtung (1) aufweist:

Empfangsmittel, die konfiguriert sind, Funksignale zu empfangen, die durch mehrere Funkträger (2a, 2b, 2c) emittiert werden;
Feststellungsmittel, die konfiguriert sind festzustellen, ob ein Funkträger (2a, 2b, 2c) der mehreren Funkträger (2a, 2b, 2c) Funksignale emittiert, die ein Kriterium A erfüllen, dass ein Frequenzbereich der Funksignale einem vorbestimmten Frequenzbereich entspricht, beruhend auf den empfangenen Funksignalen, wobei der vorbestimmte Frequenzbereich derart ist, dass ein Datenpaket zwischen dem Funkträger (2a, 2b, 2c) und der Vorrichtung (1) innerhalb eines vordefinierten Zeitintervalls T1 übertragen wird; und
Verbindungsmittel, die konfiguriert sind, die Vorrichtung (1) mit dem Funkträger (2a, 2b, 2c) zu verbinden, wenn das Funksignal des Funkträgers (2a, 2b, 2c) das Kriterium A erfüllt;
wobei die Feststellungsmittel ferner konfiguriert sind festzustellen, ob ein Funkträger (2a, 2b, 2c) der mehreren Funkträger (2a, 2b, 2c) Funksignale emittiert, die ein Kriterium B erfüllen, dass die Funksignale die höchste Signalstärke unter den durch die mehreren Funkträger (2a, 2b, 2c) emittierten Funksignalen aufweisen, und
wobei die Verbindungsmittel ferner konfiguriert sind, die Vorrichtung (1) mit dem Funkträger (2a, 2b, 2c) zu verbinden, wenn der Funkträger (2a, 2b, 2c) Funksignale emittiert, die das Kriterium B erfüllen, in dem Fall, dass kein Funkträger (2a, 2b, 2c) Funksignale emittiert, die das Kriterium A erfüllen.

13. Vorrichtung (1) nach Anspruch 12, die ein Teilnehmer-Identitätsmodul, SIM, Applet aufweist, das konfiguriert ist, mit dem Feststellungsmittel zu kommunizieren und den Feststellungsmittel Maßnahmen zum Auswählen des Funksignals gemäß dem Kriterium A und/oder Kriterium B bereitzustellen.

14. System (4) zur Steuerung einer Verbindung zwischen einer Vorrichtung (1), die eine Internet-der-Dinge-Vorrichtung ist, und einem Funkträger, wobei der Funkträger konfiguriert ist, Funksignale zu emittieren, die einem bestimmten Funkkanal entsprechen, wobei das System (4) aufweist:

Empfangsmittel, die konfiguriert sind, Funksignale zu empfangen, die durch mindestens eine Vorrichtung emittiert werden,
Feststellungsmittel, die konfiguriert sind festzustellen, ob eine Vorrichtung (1a) der mindestens einen Vorrichtung Funksignale gemäß einem Kriterium A emittiert,

- dass ein Frequenzbereich des Funksignals einem vorbestimmten Frequenzbereich entspricht, wobei der vorbestimmte Frequenzbereich derart ist, dass ein Datenpaket zwischen dem Funkträger (2a) und der Vorrichtung (1a) innerhalb eines vordefinierten Zeitintervalls T1 übertragen wird, und

Identifizierungsmittel, die konfiguriert sind, die Vorrichtung (1a) durch eine internationale Mobilfunk-Teilnehmerkennung zu identifizieren, und
Verbindungsmittel, die konfiguriert sind, die Vorrichtung (1a) mit dem Funkträger (2a) zu verbinden, wenn das Kriterium A erfüllt ist;
wobei die Feststellungsmittel ferner konfiguriert sind festzustellen, ob die Vorrichtung (1a) Funksignale emittiert, die ein Kriterium B erfüllen, dass die Funksignale die höchste Signalstärke unter den durch die mindestens eine Vorrichtung emittierten Funksignalen aufweisen, und
wobei die Verbindungsmittel ferner konfiguriert sind, die Vorrichtung (1a) mit dem Funkträger (2a, 2b, 2c) zu verbinden, wenn die Vorrichtung (1a) Funksignale emittiert,
die das Kriterium B erfüllen, in dem Fall, dass keine Vorrichtung Funksignale emittiert,
die das Kriterium A erfüllen.

## Revendications

1. Procédé de commande d'une connexion entre un dispositif (1), qui est un dispositif d'Internet des objets, et un support radio (2a, 2b, 2c), ledit procédé comprenant au moins les étapes suivantes exécutées par le dispositif dans l'ordre suivant :

a) réception de signaux radio émis par une pluralité de supports radio (2a, 2b, 2c), chaque support de la pluralité de supports radio (2a, 2b, 2c) émettant des signaux radio correspondant à un certain canal radio ;

b) détermination si un support radio (2a, 2b, 2c) de la pluralité de supports radio (2a, 2b, 2c) émet des signaux radio conformément à un critère A selon lequel une plage de fréquence des signaux radio correspond à une plage de fréquence prédéterminée sur la base des signaux radio reçus, la plage de fréquence prédéterminée étant telle qu'un paquet de données est transmis entre le support radio (2a, 2b, 2c) et le dispositif (1) pendant un intervalle temporel prédéfini T1 ;

c) connexion du dispositif (1) avec le support radio (2a, 2b, 2c) si les signaux radio du support radio (2a, 2b, 2c) satisfont au critère A ;

dans le cas où aucun support radio (2a, 2b, 2c) n'émet de signaux radio satisfaisant au critère A, détermination si un support radio (2a, 2b, 2c) de la pluralité de supports radio (2a, 2b, 2c) émet des signaux radio satisfaisant à un critère B selon lequel les signaux radio ont l'intensité de signal maximale parmi les signaux radio émis par la pluralité de supports radio (2a, 2b, 2c), et connexion du dispositif (1) avec le support radio (2a, 2b, 2c) si le support radio (2a, 2b, 2c) émet des signaux radio satisfaisant au critère B.

2. Procédé selon la revendication 1, où la plage de fréquence est telle qu'une durée de symbole est supérieure à un temps de transfert T du paquet de données entre le support radio (2a, 2b, 2c) et le dispositif (1).

3. Procédé selon la revendication 1 ou la revendication 2, où dans le cas où le dispositif (1) est connecté au support radio (2b) conformément au critère B, exécution des étapes a) à c), après écoulement d'un intervalle temporel prédéfini T2, ledit intervalle temporel prédéfini T2 étant supérieur à l'intervalle temporel prédéfini T1.

4. Procédé selon l'une des revendications 1 à 3, comprenant l'exécution de l'étape a) pendant un intervalle temporel prédéfini T3 avant le déclenchement de l'étape b), ledit intervalle temporel prédéfini T3 étant supérieur à l'intervalle temporel prédéfini T1 et inférieur à l'intervalle temporel prédéfini T2.

5. Procédé selon l'une des revendications 1 à 4, où des signaux radio émis par une pluralité de supports radio (2a, 2b, 2c) sont reçus, et dans le cas où il est déterminé que plus d'un support radio de la pluralité de supports radio (2a, 2b, 2c) émet des signaux radio satisfaisant au critère A, ledit procédé comprend en outre la détermination si un support radio (2a, 2b, 2c) de la pluralité de supports radio (2a, 2b, 2c) satisfaisant au critère A émet des signaux radio satisfaisant au critère B, et la connexion du dispositif (1) avec le support radio (2a, 2b, 2c) si les signaux radio du support radio (2a, 2b, 2c) satisfont aux critères A et B.

6. Procédé selon l'une des revendications 1 à 5, comprenant l'identification d'un support radio desdits au moins un support radio (2a, 2b, 2c) en fonction de ses signaux radio et/ou des propriétés d'un canal radio.

7. Procédé selon l'une des revendications 1 à 6, comprenant

la détermination si un support radio desdits au moins un support radio (2a, 2b, 2c) est compris dans une liste de sélection de supports radio (2a, 2b, 2c),

la connexion du dispositif (1) avec le support radio (2a, 2b, 2c) compris dans la liste de sélection de supports radio (2a, 2b, 2c), et si aucun support radio (2a, 2b, 2c) compris dans la liste de sélection de supports radio (2a, 2b, 2c) n'est trouvé, la détermination du support radio (2a, 2b, 2c) satisfaisant aux critères A et/ou B et la connexion du support radio (2a, 2b, 2c) desdits au moins un support radio (2a, 2b, 2c) au dispositif (1) si les signaux radio du support radio (2a, 2b, 2c) desdits au moins un support radio satisfont aux critères A et/ou B.

8. Procédé selon la revendication 7, où la liste de sélection de supports radio (2a, 2b, 2c) comprend la priorisation suivante pour éléments $n \in N$ :

- $n^e$ priorité = support radio (2a, 2b, 2c) d'un fournisseur de service n,
- $(n + 1)^e$ priorité = support radio (2a, 2b, 2c) avec plage de fréquence prédéterminée,
- $(n + 2)^e$ priorité = support radio (2a, 2b, 2c) avec un code de pays mobile ou un code de réseau mobile prédéfinis, où l'ordre de sélection du support radio (2a, 2b, 2c) est défini par n.

9. Procédé selon la revendication 7 ou la revendication 8, où

dans le cas où plus d'un support radio de la pluralité de supports radio (2a, 2b, 2c) est compris dans la liste de sélection, ledit procédé comprend la détermination si un support radio (2a, 2b, 2c) de la pluralité de supports radio (2a, 2b, 2c) compris dans la liste de sélection satisfait au critère A et/ou au critère B, et la connexion du dispositif (1) avec le support radio (2a, 2b, 2c) si le support radio (2a, 2b, 2c) est compris dans la liste de sélection et les signaux radio des supports radio (2a, 2b, 2c) satisfont au critère A et/ou au critère B.

10. Procédé selon l'une des revendications 7 à 9, où, dans le cas où le dispositif (1) est connecté au support radio satisfaisant au critère A, le support radio satisfaisant au critère B, ou le support radio est compris ailleurs qu'à la première place de la liste de sélection, l'exécution des étapes a) à c) après écoulement d'un intervalle temporel prédéfini T4.

11. Procédé de commande d'une connexion entre un dispositif (1), qui est un dispositif d'Internet des objets, et un support radio (2a) par le support radio (2a), ledit procédé comprenant au moins les étapes suivantes exécutées par un système (4) dans l'ordre suivant :

a) réception de signaux radio émis par au moins un dispositif,
b) détermination si un dispositif (1a) desdits au moins un dispositif émet des signaux radio satisfaisant à un critère A,

- selon lequel une plage de fréquence du signal radio correspond à une plage de fréquence prédéterminée, la plage de fréquence prédéterminée étant telle qu'un paquet de données est transmis entre le support radio (2a) et le dispositif (1a) pendant un intervalle temporel prédéfini T1, et
- selon lequel le dispositif (1a) est identifié par une identité internationale d'abonné mobile, et

c) connexion du dispositif (1a) avec le support radio (2a) s'il est satisfait au critère A, dans le cas où aucun dispositif n'émet de signaux radio satisfaisant au critère A, détermination si un dispositif (1a) desdits au moins un dispositif émet des signaux radio satisfaisant à un critère B selon lequel les signaux radio ont l'intensité de signal maximale parmi les signaux radio émis par lesdits au moins un dispositif, et connexion du dispositif (1) avec le support radio (2a) s'il est satisfait au critère B.

12. Dispositif (1), qui est un dispositif d'Internet des objets, pour la commande d'une connexion à un support radio, ledit support radio étant configuré pour émettre des signaux radio correspondant à un certain canal radio, ledit dispositif (1) comprenant :

une unité de réception configurée pour recevoir des signaux radio émis par une pluralité de supports radio (2a, 2b, 2c) ;
une unité de détermination configurée pour déterminer si un support radio (2a, 2b, 2c) de la pluralité de supports radio (2a, 2b, 2c) émet des signaux radio satisfaisant à un critère A selon lequel une plage de fréquence des signaux radio correspond à une plage de fréquence prédéterminée sur la base des signaux radio reçus, la plage de fréquence prédéterminée étant telle qu'un paquet de données est transmis entre le support radio (2a, 2b, 2c) et le dispositif (1) pendant un intervalle temporel prédéfini T1 ; et
une unité de connexion configurée pour connecter le dispositif (1) avec le support radio (2a, 2b, 2c) si le signal radio du support radio (2a, 2b, 2c) satisfait au critère A ;
l'unité de détermination étant en outre configurée pour déterminer si un support radio (2a, 2b, 2c) de la pluralité de supports radio (2a, 2b, 2c) émet des signaux radio satisfaisant à un critère B selon lequel les signaux radio ont l'intensité de signal maximale parmi les signaux radio émis par la pluralité de supports radio (2a, 2b, 2c), et où l'unité de connexion est en outre configurée pour connecter le dispositif (1) avec le support radio (2a, 2b, 2c) si le support radio (2a, 2b, 2c) émet des signaux radio satisfaisant au critère B dans le cas où aucun support radio (2a, 2b, 2c) n'émet de signaux radio satisfaisant au critère A.

13. Dispositif (1) selon la revendication 12, comprenant un applet de module d'identité d'abonné, SIM, configuré pour communiquer avec l'unité de détermination et pour fournir des mesures à l'unité de détermination afin de sélectionner le signal radio conformément au critère A et/ou au critère B.

14. Système (4) pour la commande d'une connexion entre un dispositif (1), qui est un dispositif d'Internet des objets, et un support radio, le support radio étant configuré pour émettre des signaux radio correspondant à un certain canal radio, ledit système (4) comprenant :

une unité de réception configurée pour recevoir des signaux radio émis par au moins un dispositif,
une unité de détermination configurée pour déterminer si un dispositif (1a) desdits au moins un dispositif émet des signaux radio conformément à un critère A,

- selon lequel une plage de fréquence du signal radio correspond à une plage de fréquence prédéterminée, ladite plage de fréquence prédéterminée étant telle qu'un paquet de données est transmis entre le support radio (2a) et le dispositif (1a) pendant un intervalle temporel prédéfini T1, et

une unité d'identification configurée pour identifier le dispositif (1a) par une identité internationale d'abonné mobile, et

une unité de connexion configurée pour connecter le dispositif (1a) avec le support radio (2a) s'il est satisfait au critère A ;

où l'unité de détermination est en outre configurée pour déterminer si le dispositif (1a) émet des signaux radio satisfaisant à un critère B selon lequel les signaux radio ont l'intensité de signal maximale parmi les signaux radio émis par lesdits au moins un dispositif,

et

où l'unité de connexion est en outre configurée pour connecter le dispositif (1a) avec le support radio (2a, 2b, 2c) si le dispositif (1a) émet des signaux radio satisfaisant au critère B dans le cas où aucun dispositif n'émet de signaux radio satisfaisant au critère A.

Fig. 3

## REFERENCES CITED IN THE DESCRIPTION

### Patent documents cited in the description

- WO 2017139047 A1
- US 20170245316 A1
- US 20170339629 A1